# EUROPEAN PATENT APPLICATION

(11) **EP 4 450 799 A1**
(43) Date of publication of application: **23.10.2024**
(21) Application number: 23169210.4
(22) Date of filing: 21.04.2023
(51) Int. Cl.: F03B 13/20

(54) **A WAVE ENERGY DEVICE**

(71) Applicant: Crestwing ApS, 9900 Frederikshavn (DK)
(72) Inventor: BLOOM, Ruth Ida, 5800 Nyborg (DK); BLOOM, Rune Pilgaard, 8250 Egå (DK)
(74) Representative: AWA Denmark A/S

(57) **Abstract**

A wave energy device (1) adapted for extracting and converting mechanical energy of sea-waves to electrical energy. The wave energy device (1) comprises a first float (2) and a second float (3) connected to each other along a common hinge axis (4), so as to be movable with respect to each. A plurality of force transmission members (9) extend between the first float (2) and the second float (3), each force transmission member having a passive end (10) and an active end. The passive end is movably connected to one of said first and second floats (2, 3) in a rotatable manner, and each force transmission member (9) is associated with at least one of a plurality of electrical generators so as to allow the electrical generator to be driven by relative motion between the first and second floats (2, 3).

## Description

The present invention relates to a wave energy device adapted for extracting and converting mechanical energy of sea-waves to electrical energy.

In recent years there has been an increased interest in renewable energy, i.e. non-fossil based energy production, based on e.g. sun, wind, tides and sea-waves. Economically viable energy production from sea-waves requires units at locations where the sea-waves contain a lot of energy to be tapped, i.e. where the waves are on average big. Tapping big waves, in turn, generally requires large-scale wave energy devices. Still, however, being caused by the wind wave height and wave lengths vary a lot overtime. From still days with no waves or only fading ocean swells to hurricanes with high waves. This, in turn, means that the wave energy device should be adapted to extract and convert energy from a wide range of wave patterns in order to achieve a high average energy extraction

Applicant has earlier successfully demonstrated a functioning small-scale prototype at sea of a wave energy device comprising a first float and a second float connected to each other along a common hinge axis, so as to be movable with respect to each other about the hinge axis. A rod having a passive end and an active end extends between the first float and the second float the passive end being movably connected to the first float in a rotatable manner, and the rod being kinematically connected to an electrical generator in the second float. See e.g. https://da.wikipedia.org/wiki/Crestwing or https://www.energy-supply.dk/article/view/641971/tor-denskiold ligger stabilt og producerer strom.

Scaling up from a small-scale demonstration prototype to a full-scale production plant with high average energy extraction and conversion efficiency is, however, far from trivial and has necessitated rethinking of the power take off system converting the motion of the floats to useful energy. In particular when scaling up to big waves, the wave energy device must remain rugged and reliable in order to cope with the harsh conditions offshore, where repair and maintenance is costly.

Based on the above it is the object of the present invention to provide a wave energy device adapted for extracting and converting mechanical energy of sea-waves to electrical energy of the type comprising a first float and a second float connected to each other along a common hinge axis, so as to be movable with respect to each other about the hinge axis, which overcomes the above problems.

According to a first aspect of the invention this is achieved by a wave energy device adapted for extracting and converting mechanical energy of sea-waves to electrical energy, said wave energy device comprising a first float and a second float connected to each other along a common hinge axis, so as to be movable with respect to each other about the hinge axis, a plurality of force transmission members extending between the first float and the second float, each force transmission member having a passive end and an active end, the passive end being movably connected to one of said first and second floats in a rotatable manner, and the force transmission member being kinematically connected to at least one of a plurality of electrical generators so as to allow the electrical generator to be driven by relative motion between the first and second floats.

Providing a plurality of force transmission members and a plurality of electrical generators provides several advantages. First of all the forces transferred from the float at the passive end of each force transmission member to the generator at or in the proximity of the active end in the other float is far less than if one single force transmission member were to be used. A single force transmission member having to be able to withstand by itself the forces existing at peak loads in e.g. a hurricane would have to be very sturdy and massive. Moreover, should it break the entire wave energy device would be rendered unproductive until it could be repaired. Likewise, a single generator would have to be able to cope with the peak load on itself in such a hurricane and failure would render the entire wave energy device unproductive. With a plurality of generators, if one should fail, the maximum generator capacity of the system would be reduced until repairs. The maximum generator capacity is only utilized in a small fraction of wave environments. With a single generator or force transmission member failure, this allows a close to 100% output in anything but the most energetic waves, as the capacity of the generator system is not fully utilized. Furthermore, the bigger the force transmission member and the generator the more difficult a repair would be *in situ* at the offshore location, and having to tow the wave energy device to a suitable location ashore. This would give a substantial down-time where no production and hence no earnings are made, but costs incurred instead.

According to an embodiment of the first aspect of the invention, the force transmission member is kinematically connected to at least one electrical generator of the plurality of electrical generators. Using a kinematic connection may keep the losses in the energy transfer from the waves to the electrical generators down as compared to e.g. pneumatic or hydraulic connections for energy transfer.

According to an embodiment, the force transmission member comprises a rod. Rods in connection with e.g. rack and pinion arrangements may be made rugged and sturdy to suit the harsh offshore conditions at open sea.

According to an embodiment of the first aspect of the invention a control mechanism for selectively engaging one or more of said electrical generators of said plurality of electrical generators. Having plural rods and selectively engageable electrical generators will allow some of the generators to idle when outside peak load situations, e.g. by decoupling the associated generatorfrom the associated rod so that the rod does not drive the generator. This, in turn, means that most of the time not all generators will be running and generating power, and therefore not be subject to any mechanical wear. With suitable control an ever changing subset of generators will allow the generators to mostly run intermittently and thus reducing wear on each individual generator, in turn allowing long service intervals for the wave energy device where the offshore service and maintenance is costly. Furthermore, the number of generators in a subset can be adapted to the current sea-waves. That is to say, the hinged floats move mutually with the hinge axis moving up and down over and between wavetops and the floats rotating accordingly, ideally following the surface of the waves. However, the more energy extracted the more rigid the connection formed by the rods between floats will appear. If too rigid, the motion is inhibited and does not follow the waves ideally and too little energy is transmitted from the waves to the generators, and if too soft too little energy is taken up from the waves by the generators. Accordingly, depending on the waves at a given moment a suitable number of generators can be activated so that their total rated power provides an optimally matched resistance to the motions of the floats in the waves. In this way the energy extraction and conversion may be optimised for a large range of wave heights and wave lengths.

According to an embodiment of the first aspect of the invention, the plurality of electrical generators comprises electrical generators of different rated power. This allows for different combination of ratings and thus allows for a finer adaptation of the resistance to motion than if only multiples of one rated power for the generators is employed.

According to an embodiment of the first aspect of the invention, the wave energy device comprises a control mechanism adapted to control the power take-off of at least one of the electrical generators of said plurality of electrical generators. That is to say, the amount of energy extracted from the waves by the electrical generator. This will allow to fine tune the resistance to the motions of the wave energy device to the wave conditions even further and increase the efficiency of energy extraction and conversion.

According to an embodiment of the first aspect of the invention, this power take-off of the at least one electrical generator of said plurality of electrical generators is controlled by adjustment of the excitation current of the electrical generator. This is a simple, yet efficient way of providing the fine tuning to the currently prevailing waves.

According to an embodiment of the first aspect of the invention, the at least one electrical generator is a self-exciting generator. Self-exciting generators are well proven generators that are readily available off the shelf is suitable sizes from many manufacturers.

According to an embodiment of the first aspect of the invention, wave energy device is adapted to drive different sets of electrical generators, dependent on the direction of motion of the rods with respect to the second float. Experience has shown that overall extraction efficiency is increased when less energy, or even no energy, is extracted when the float to which passive end the rod is connected pulls on the rod, i.e. when the hinge moves over a wavetop and the two floats dive into the trough on either side thereof.

According to an embodiment the kinematic chain may, as indicated above, comprise a rack and pinion arrangement adapted to provide rotary motion of an input shaft of said at least one electrical generator of said plurality of electrical generators. This as mentioned involves low losses, and may be made very simple and rugged.

According to an embodiment of the first aspect of the invention the wave energy device comprises a momentum based mechanical system adapted to even out the motion of the axis to reduce the difference between maximum and minimum RPM of said at least one electrical generator. This allow the power output to be partially smoothed out at an early stage in the energy conversion, facilitating the final smoothing for useful electrical output if power is to be provided directly for an electricity grid.

According to an embodiment of the first aspect of the invention, said momentum based mechanical system comprises a flywheel. Flywheels are well proven mechanisms for temporarily storing energy in order to mitigate fluctuations.

The invention will now be described in greater detail based on non-limiting exemplary embodiments and the drawings on which:
Fig. 1 is a schematical view of the wave energy device according to the invention moored to the seabed at sea,
Fig. 2 is a side view of a wave energy device,
Fig. 3 is a top plan view of the wave energy device of Fig. 1,
Figs. 4a-4c are schematic illustrations of the motion pattern of the wave energy device of Fig. 1, and
Fig. 5 is a schematic illustration of the force transmission member and generator equipment in the machine room.

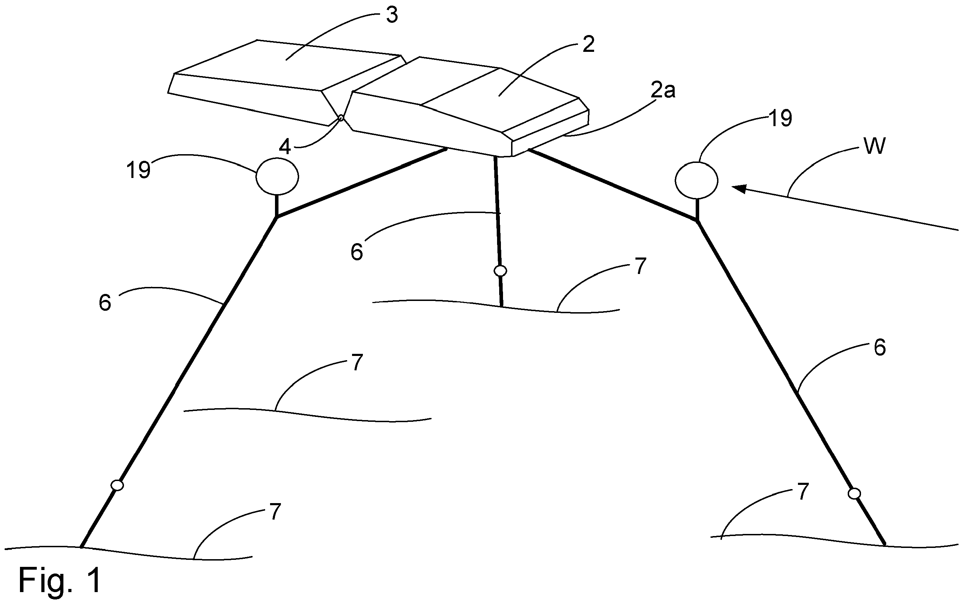

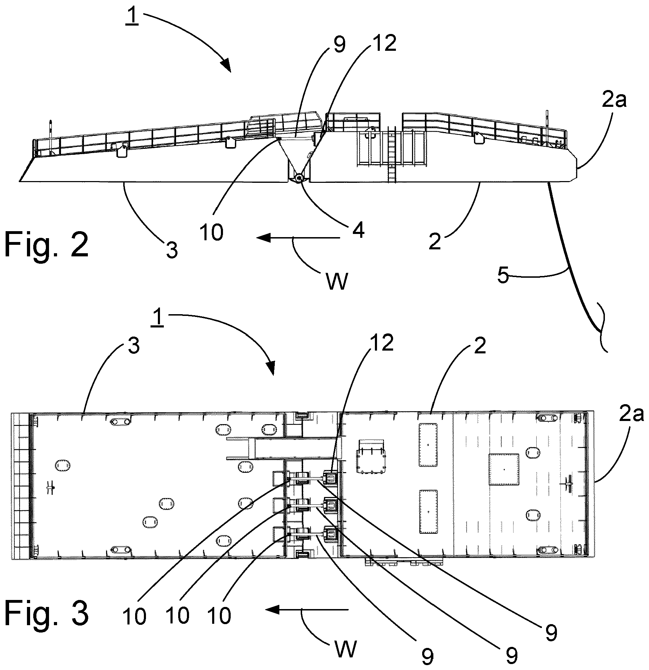

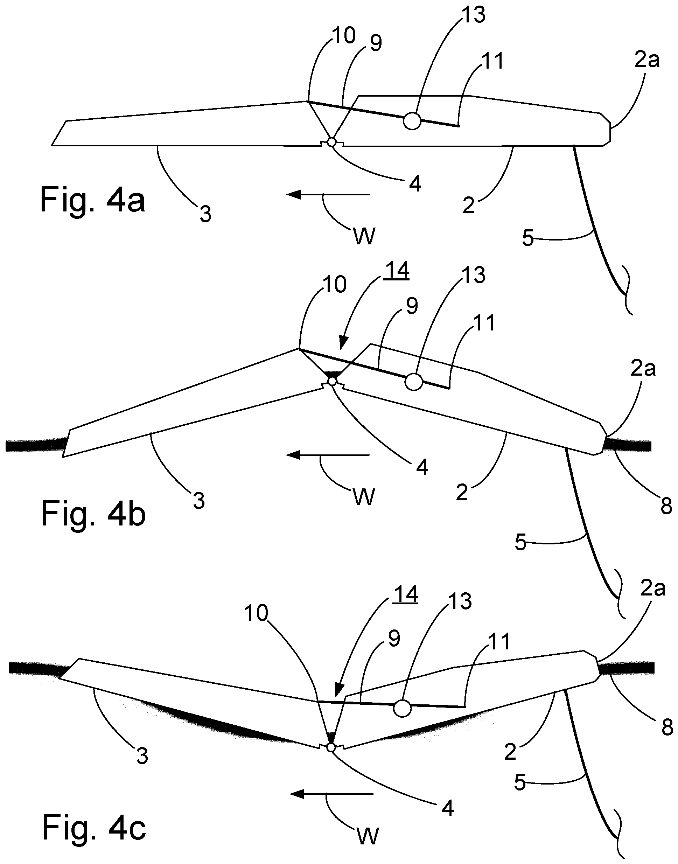

Turning first to Fig. 1 a wave energy device 1 according the invention adapted for extracting and converting mechanical energy of sea-waves 8 to electrical energy can be seen. The wave energy device 1 comprises two floats 2, 3 allowing the wave energy device 1 to float in the surface with low draft so as to essentially follow the wave motions of the surface waves 8. To ensure the proper orientation with respect to the incoming waves an active mooring system 5 preferably comprising a number of elastic cables 6 that extends from a location proximal to the leading edge 2a of the leading first float 2 towards the seabed 7. This active mooring system 5 in conjunction with a design where the length of the wave energy 1 device being longer than the width, as can be seen in the top plan view of Fig. 3, allows the wave energy device 1 to always maintain the leading edge 2a of the leading float 2 cross-wise with respect to the incoming waves 8, cf. Figs. 4b and 4c.

The wave energy device 1 comprises a first float 2 and a second float 3 connected to each other along a common hinge axis 4. The first float 2 and the second float 3 may differ from each other in their overall individual shape, so as to adapt one to be the leading float with respect to the direction of incoming waves, i.e. the wavefront, as indicated with arrows W Figs. 1 to 4, and one to be a trailing float. If they differ, the mooring system 5 is associated with and partly accommodated within the leading first float 2. In the illustrated embodiments the leading float is the first float 2, and the proximal end of the mooring system is preferably located close to the leading edge 2a within the first float 2. The first float 2 and the second float 3 are movable with respect to each other about the hinge axis 4 so as to allow mutual pivotal motion. The hinge or hinges forming the hinge axis 4 and connecting the first and the second float may be any kind of hinges suitable to withstand the harsh offshore conditions, *inter alia* salt water and forces imparted by wind and waves.

One of the floats 2, 3 may essentially just be a hollow box, performing the functions of a float only, whereas the other serves both as a float and accommodates a machine room. It is of course not excluded that machine rooms may be provided within both the first float 2 and the second float 3.

A plurality of force transmission members 9, three of which are visible in the top plan view of Fig. 3, extend between the first float 2 and the second float 3. Each force transmission member 9 has a passive end 10 and an active end 11 (not visible in Figs. 1 to 3). The passive end 10 movably connected to one of said first and second floats 2, 3 in a rotatable manner, e.g. hinged. In the illustrated embodiments the passive ends 9 of each of the force transmission members 9 are connected to the exterior of the trailing second float 3, so as not to break the sealed integrity of the second float as can be seen in Figs. 2 and 3. Towards the active end, on the other hand, the force transmission member is associated with at least one of a plurality of electrical generators 13 accommodated in a machine room within the other float, i.e. within the first float 2 in the illustrated embodiments, as can be seen in Fig 4. If machine rooms are accommodated in both the first float 2 and the second float 3 the passive ends 10 of some force transmission members 9 would be connected to one float and the active end associated with generators in the other float and vice versa, preferably in an alternating manner in the cross-wise direction of the wave energy device. For simplicity of explanation, it will for the remainder of this description be assumed that only the first, leading float 2 contains a machine room as illustrated in the figures, but as will be understood, the machine room could also be accommodated in the second, trailing float 3 or in both. Suitable lead-ins 12 are provided in the outer wall of the first float 2 so as to allow passage of the force transmission members 9 though the wall of the float while at the same time keeping the floats 2, 3 sealed against ingress of water.

The force transmission members 9 preferably comprise rods where the passive end 10 is hinged to the second float 3 e.g. by a simple eyelet and cross-bolt arrangement. As an alternative to rods 9 a tube or other sufficiently sturdy member would do. Chains that may only bend in one direction could also be used, and may even allow for a configuration where, unlike the illustrated preferred embodiments where the major power take-off is derived from push forces from the narrowing of the gap 14 between the first and second floats 2, 3, the forces are pull forces from the expansion of the gap 14. In any case, the electrical generators 13 are ultimately to be driven by relative motion between the first and second floats 2, 3 one way or the other.

Turning now to the schematic illustrations of Fig. 4 it can be seen how the force transmission member 9 interacts with a generator 13 in the machine room within the first float 2. There can, of course, be a plurality of generators but in the following reference will be made to just one for brevity. Fig. 4a illustrates the wave energy device in a neutral position as if would float in the water surface if there are no disturbing surface waves 8. If, however, there are waves the floats 2, 3 will follow the waves and continuously flip between a open configuration as shown in fig 4b where the gap 14 between the floats 2, 3 is expanded because the hinge axis 4 is moving over a wave crest to a closed configuration as shown in Fig 4c where the gap 14 is collapsed because the hinge axis 4 has moving into the bottom of a wave trough between two waves.

This gives rise to a relative motion between each force transmission member 9 and the associated generator 13 because the generator is at a fixed position in the machine room within the first float 2. The generator 13 is arranged at an intermediate position between the passive end 10 of the force transmission member 9 and active end 11. Preferably the length of the force transmission member 9 and the location of the generator 13 are so adapted that the generator 13 is closer to the active end 11 of the force transmission member 9 than the passive end 10 thereof but of course still allowing for full displacement or stroke of the force transmission member 9 when it reciprocates with respect to the generator 13.

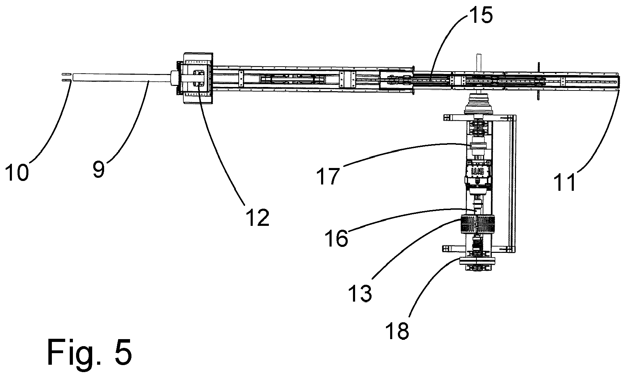

The coupling between the force transmission member 9 and the is preferably a rack and pinion arrangement, as illustrated in Fig. 5. That is to say the force transmission member 9 comprises at its active end a toothed rack 15 which a pinion associated with the shaft 16 of a generator engages to convert the linear motion of the force transmission member 9 to rotary motion in the generator. The pinion may be fixed directly on the input shaft of 16 the generator for direct drive. Preferably, however, a one-way clutch 17 or ratchet mechanism is interposed e.g. so as to not drive the generator in both directions of the reciprocating motion of the force transmission member 9. Essentially, the generator seeks to resist the mutual motion between the first and second floats 2, 3 by extracting the energy. However properly controlling the extracted energy allows the mutual motions to follow the waves in an optimal manner. In this respect, experience has shown that the energy extraction efficiency of the wave energy device is increased if energy is only or mainly extracted in the push motion, viz. when the gap 14 closes as the hinge axis 4 moves towards the bottom of a wave trough. It should in this respect be mentioned that if power is only extraction in one direction, the force transmission members 9 could be chains transferring pull forces could be used if e.g. slack of the chains are automatically reeled in in the push direction or if chains bendable in one direction only are used.

The one-way 17 clutch may, however, also allow the use of a flywheel 18 to smoothen out the speed variations of the generator 13 because with the one-way clutch 17 the generator 13 will always run in one and the same direction. Other momentum based mechanical systems than flywheels adapted to even out the motion of the axis to reduce the difference between maximum and minimum RPM of the electrical generator could of course also be used. Apart from the one-way clutch 17 a further clutch or coupling should preferably be provided in order to disconnect entirely the generator 13, flywheel 18, etc., from the rack 15, so as to selectively engage or disengage one or more of the generators depending on the current wave situation and hence, the power extraction needed. It is also not excluded that the clutch or coupling between the force transmission member 9 and the generators may involve interposed hydraulics. Such hydraulics may then include hydraulic pressure storage for smoothing out the power generation by the electrical generators. For single generator setups, a possible system could involve multiple force transmission members 9 all connected to the same axis with multiple pinions or push on the same hydraulic fluid which transfer the total load to a single generator. A control mechanism for performing this selective engaging of one or more of said electrical generators of said plurality of electrical generators. The control mechanism is preferably computer controlled acting on received input regarding current waves and predicted waves or wave patterns. The control system can be algorithmically controlled through power electronics and an optimized Maximum Power Point Tracking (MPPT) system.

For best possible adaptation to multiple wave heights and wave lengths the plurality of electrical generators that may selectively be engaged or disengaged comprises electrical generators of different rated power. For instance, the rated powers could be in multiples 1, 2, 3, 5, 10, 20, 30, 50, etc. of the rated power of smallest electrical generator. This merely an example and other sets of rated powers could of course also be used, e.g. taking into account the sum of power ratings most frequently needed for the waves at a given location. This increases the possibility of finding a suitable combination of rated generator power for a specific need, in particular in case of failure of a generator 13, until it can be repaired or replaced. That is to say if one larger rated generator 13 fails it may be substituted temporarily by a combined set of the remaining smaller rated generators 13 totalling the same or approximately the same rated power. The force transfer members could also be adapted to the rated power of the associated generator so that less sturdy force transmission members could be used.

Evidently it is not excluded that all generators 13 or groups of generators 13 could have the same rated power. If several electrical generators 13 are all rated for the power take off of the most typical wave patterns, each of these several generators 13 could run intermittently one after the other in a cyclic manner. This will reduce the overall wear as compared to one single electrical generator 13 running most of the time, thereby increasing intervals between the costly service, maintenance or repair. As for the latter the intermittent use in a cyclic manner could continue even if one or a few of the electrical generators 13 should fail. That would of course increase wear slightly on the remaining functional electrical generators 13, but weighed against the cost of immediate need for repair that would still be acceptable. The situations where the waves are so big that all generators would need to run simultaneously for optimal power extraction are infrequent, so a loss of generation from one or a few electrical generators 13 in those situations weighed against the increased costs of shorter repair intervals is acceptable.

Depending on the type of generator 13 used it may also be possible to additionally or alternatively have the control mechanism controlling the power take-off of at least one of the electrical generators of said plurality of electrical generators 13. This could e.g. be done by having the control mechanism adjustment of the excitation current of the electrical generator 13. This would in particular be relevant if groups of identical generators 13 or groups are used, because having identical generators would be easier to handle in the supply chain, in turn making repair and replacement easier. Preferred are currently self-exiting generators as they may not only be regulated in this manner but also come as an off the shelf product from a wide range of suppliers and in suitable sizes for wave energy devices 1 according to the invention. Other types of generators, such permanent magnet generators or squirrel cage generators are, however, not excluded.

As an alternative to the use of a single one-way clutch 17 to allow the wave energy device 1 to follow the waves 8 by using only the push direction of the reciprocating force transmission member 9 it may also be possible to use a second one-way clutch 17, so as to have two oppositely acting one-way clutches 17 on the same force transmission member 9. Using a lower rated generator 13 together with the second one-way clutch 17 would allow extraction of some wave energy also in the opposite direction of the reciprocating movement of the force transmission member 9. This may improve energy extraction without inhibiting the movement of the floats when they follow the waves 8. A mechanical rectifier can achieve the same result by transforming the rotation made by the pulling motion into rotation in the same direction as the pushing motion, allowing for the use of only a single generator 13. This generator should be lower rated or controllable.

To keep the geographical position of the wave energy device 1, the wave energy device 1 is moored to the seabed 7 by a mooring system 5. The mooring system 5 is permanently secured to the seabed and the wave energy device 1 is connected to the mooring system 5 within the first float 2. The mooring system 5 may be associated with or include electrical export cables if electrical energy is to be delivered to the onshore electricity grid. The wave energy device thus does not include any onboard anchoring system that would have to be lifted if the wave energy device is to go ashore for repair, service or maintenance. Instead, it can simply be disconnected from the mooring system 5 and towed away while the mooring system 5 is left in place for reconnection upon return of the wave energy device 1 to the position. Submerged buoys 19 may be fitted to the mooring system 5, so as to prevent the cables from falling to the seabed 7 and cause environmental damage when left, as well as otherwise during operation. This also facilitates recovery of the mooring system 5 once a reconnection is necessary. The mooring system 5 is connected to a swivel mechanism within the first float 2 allowing the float to turn an indefinite angle and always have the leading edge 2a up against the direction W of the incoming waves or wavefront. Accordingly, the swivel mechanism is located as close as practically possible to the leading edge 2a. Preferably, more than one mooring cable 6, e.g. three are used so as to better keep the exact geographical position of the wave energy device 1, independent of the direction W of incoming waves, the wind and currents. The energy production is dependent on the ability of the first and second floats 2, 3 to follow the waves 8 and bend mutually with respect to the common hinge axis 4, the mooring system 5 has no active role in the energy extraction and is merely for keeping the position of the wave energy device 1. Accordingly, the cables 6 may comprise elastic sections, e.g. bungees, and sections that do not stretch under tension. Having elastic sections of cables in the mooring system will allow the leading float 2 and in particular the leading edge 2a thereof the follow the waves 8 on the surface rather than piercing them, which in the latter case would lead to decreased energy extraction as compared to following the waves.

## Claims

1. A wave energy device adapted for extracting and converting mechanical energy of sea-waves to electrical energy, said wave energy device comprising
a first float and a second float connected to each other along a common hinge axis, so as to be movable with respect to each other about the hinge axis,
a plurality of force transmission members extending between the first float and the second float, each force transmission member having a passive end and an active end, the passive end being movably connected to one of said first and second floats in a rotatable manner, and each force transmission member being associated with at least one of a plurality of electrical generators so as to allow the electrical generator to be driven by relative motion between the first and second floats.

2. A wave energy device according to claim 1, wherein the force transmission member is kinematically connected to at least one electrical generator of the plurality of electrical generators.

3. A wave energy device according to any one of the preceding claims, wherein the force transmission member comprises a rod.

4. A wave energy device according to any one of the preceding claims, comprising a control mechanism for selectively engaging one or more of said electrical generators of said plurality of electrical generators.

5. A wave energy device according to any one of the preceding claims, wherein said plurality of electrical generators comprises electrical generators of different rated power.

6. A wave energy device according to any one of the preceding claims, further comprising a control mechanism adapted to control the power take-off of at least one of the electrical generators of said plurality of electrical generators.

7. A wave energy device according to claim 6, wherein the power take-off of the at least one electrical generator of said plurality of electrical generators is controlled by adjustment of the excitation current of the electrical generator.

8. A wave energy device according to any one of the preceding claims wherein the at least one electrical generator is a self-exiting generator.

9. A wave energy device according to any one of the preceding claims, adapted to drive different sets of electrical generators, dependent on the direction of motion of the rods with respect to the second float.

10. A wave energy device according to any one of claims 2-9, wherein the kinematic chain comprises a rack and pinion arrangement adapted to provide rotary motion of an input shaft of said at least one electrical generator of said plurality of electrical generators.

11. A wave energy device according to any one of claims 2 to 10, comprising a momentum based mechanical system adapted to even out the motion of the axis to reduce the difference between maximum and minimum RPM of said at least one electrical generator.

12. A wave energy device according to claim 11, wherein said momentum based mechanical system comprises a flywheel.
